# EUROPEAN PATENT SPECIFICATION

(11) **EP 2 336 733 B1**
(45) Date of publication and mention of the grant of the patent: **23.01.2013**
(21) Application number: 09179690.4
(22) Date of filing: 17.12.2009
(51) Int. Cl.: G01F 3/18, G01F 3/20, B67D 7/16

(54) **Fluid meter with membrane**
Durchflussmesser mit Membran
Mesure de fluide avec membrane

(43) Date of publication of application: 22.06.2011
(73) Proprietor: Dresser Wayne AB, 202 15 Malmö (SE)
(72) Inventor: Larsson, Bengt, 274 53, Skivarp (SE)
(74) Representative: Henriksson, Dan Ragnar Mikael

(56) References cited:
- WO-A1-98/49530
- BE-A- 341 508
- BE-A5- 798 432
- GB-A- 495 317
- GB-A- 753 881
- GB-A- 1 460 437
- US-A- 20 169
- US-A- 1 644 868
- US-A- 2 055 710
- US-A- 2 612 778
- US-A- 2 756 726
- US-A- 4 526 032
- US-A- 5 686 663

## Description

### Technical field

The present invention relates generally to a fluid meter for a fuel dispensing unit comprising a housing, partition members arranged in the housing for reciprocal action, the partition members dividing said housing in a two chambers and an intermediate crankcase, a rotatable crankshaft disposed in the crankcase and operatively connected to the partition members such that the crankshaft is rotated in response to the reciprocal action of the partition members. The invention further relates to a multiple fluid meter assembly comprising at least two such fuel meters and to a fuel dispensing unit comprising such a fuel meter or a multiple fluid meter assembly.

### Background art

Fluid meters are widely used for most kinds of fluids in different application areas. Fluid meters are for example used in fuel dispensing pumps for retail sale of motor fuel, providing a means for measuring the quantity dispensed from the pump. The measured volume is typically communicated to a register, displaying the dispensed volume and the price.

A fluid meter commonly used for fuel dispensers is shown by Ainsworth, US 2,756,726. In this disclosure a meter having a multiple piston hydraulic motor is used. Fluid is allowed to enter cylinders and cause reciprocation of the pistons. The pistons are connected to a shaft, that will rotate as an effect of the reciprocation. A rotary valve, coupled to the shaft, admits liquid to the cylinders or permits flow to the outlet connections, in proper timed relation. The fluid meter utilizes what may be termed "hypothetical" cylinders, mechanically and hydraulically cooperating with the cylinders and pistons which are structurally existent.

This is accomplished by arranging the ports and the rotary valve so as to sequentially admit fluid to both the crankcase and the ends of the cylinders at the same time as fluid is withdrawn from the cylinders. The fluid volume admitted to, or withdrawn from, the crankcase is the algebraic sum of the volume withdrawn from, or admitted to, the cylinders. Two pistons, actuated through the valve mechanism, advantageously 120 degrees out of phase, thus perform the work equivalent of three pistons. This reduces the actual number of cylinders required for a given capacity, reduces internal friction and pulsation, and achieve smoother operation. The two pistons are attached via connecting rods to a crankshaft with a radially offset crank pin. The crank pin engages a yoke in each connecting rod so that the reciprocating movement of the two pistons is transformed into a rotary motion of the crankcase in accordance with the Scotch Yoke type principle. To accomplish the phase differences between the pistons, the two physical cylinders are oriented with an angle of 120 degrees between their respective centre axis.

The Ainsworth fluid meter has several drawbacks, as e.g. the requirement of special piston guide barrels, the arrangement of cylinders and guide barrels is difficult to mould or cast and machine, and the register is driven by a shaft extending through the meter housing with accompanying risk of leakage.

A similar fluid meter is disclosed by Spalding, US 5,686,663 and WO 98/49530. This fluid meter aims at eliminating the drawbacks of the Ainsworth fluid meter. Thus, the two angled cylinders of Ainsworth are aligned along a common centre axis to eliminate the bulky construction of Ainsworth. To accomplish the same piston reciprocity, the crankshaft is modified with an extra crank arm. The in-line construction is advantageous when several meters have to be mounted in one dispenser, which is the normal case in most modern fuel dispensers.

The piston fluid meters of Ainsworth and Spalding rely on the reciprocating movement of pistons in cylindrical cylinders for volume measurements. To measure accurately it is necessary to keep the different chambers of the fluid meter, defined through the division by the pistons, sealed from each other so that fluid cannot leak from one chamber to another in the fluid meter. This is traditionally solved by using gaskets at a radial periphery of the pistons that seal the cylinder volumes from the crankcase volume by pressing against the inner walls of the cylinders. The sealing gasket is, however, sensitive to e.g. particles, pressure peaks and is easily damaged so that leakage occur between the cylinders and the crankcase. This leads to increasing measurement errors as the gasket degrade from damage and leakage increases. Since the fluid meter is driven by the flow, a fluid meter that leaks through damaged gaskets will show a smaller flow than recorded by the meter. This leads to small losses for the fuel station owner, forcing the owner to increase the fuel price to cover the loss or have the fluid meter regularly maintained to change gaskets before they become damaged and thereby avoid the problem. It is thus desirable to amend current piston fluid meters so as to remove this construction weakness.

GB 1,460,437 discloses a flow meter/in which fluid enters through an inlet 16 one or other of chambers 6, 8 through a valve 20 to expand one chamber 6, 8 and exhaust the other of chambers 8, 6 through conduits 22, 22' annular channels 24, 24', radial ports 26, 26' and outlet 18. The arrangement is such that as piston/diaphragm assemblies 10, 12, joined by a coupling 14, are moved, means is actuated at the end of the stroke to reverse the valve 20 thus allowing the flow to enter the chamber 8, 6 that has been exhausted and allow fluid to leave the chamber 6, 8 that has been filled.

### Summary of the invention

It is an object of the present invention to improve the current state of the art, to solve the above problems, and to provide an improved fluid meter for a fuel dispensing unit that is more rugged, more accurate, and require less maintenance. These and other objects are achieved by a fluid meter for a fuel dispensing unit comprising a housing, partition members arranged in the housing for reciprocal action, the partition members dividing the housing in two chambers and an intermediate crankcase, a rotatable crankshaft disposed in the crankcase and operatively connected to the partition members such that the crankshaft is rotated in response to the reciprocal action of the partition members. Each partition member is attached to the housing and arranged for reciprocal action by means of elastic or flexible deformation. The invention is characterised in that the partition members are operatively connected to the crank shaft by means of a first cam supported by said crank shaft and associated with at least one of the partition members for rotating the crankshaft in response to the reciprocal action of said partition members.

When the partition members are attached to the housing wall, the sliding movement of traditional piston gaskets is avoided. A fluid flowing through the fluid meter will however still cause a reciprocal action of each partition member by displacement thereof through elastic or flexible deformation. An elastic or flexible deformation is predictable and will not be subjected to frictional damages by particles in the flow as the gasket solution. Elasticity of the partition member can also absorb pressure transients that otherwise would threaten to damage the fluid meter. Sudden pressure variations often occur in fluid dispensing systems when the user suddenly stop the dispensing procedure. This will also further reduce the number of components needed in fluid meter.

According to a further embodiment of the invention each partition member is sealingly attached to said housing, e.g. by attaching the entire radial peripheral edge of the partition member to the inner wall. This will seal the chamber from the crankcase so that fluid cannot pass from the chamber to the crankcase. The partition member will be elastically deformed to follow the reciprocating movement of the crankshaft. The absence of friction between parts in the cylinder will provide a more robust and rugged construction with less risk of damages to the partition member that may lead to leakage between a chamber and the crankcase.

In the embodiment the partition member is arranged for reciprocal action by means of elastic deformation it is preferred that the partition members each comprises an elastic portion made of an elastomer. When the reciprocal action is achieved by means of flexible deformation it is preferred that each partition member comprises a flexible portion made of a material chosen from the group consisting of: elastomers and enforced fabric. The choice of material is chosen after the fluid that is to be measured by the fluid meter. The partition member material should not be chemically affected by the measured fluid. It is also important to use a material that is elastic or flexible during all measurement conditions for the fluid meter. A fuel meter in a fuel dispenser must e.g. be able to function correctly in hot and cold areas of the world.

In a further embodiment of the present invention each partition member comprises a rigid portion made of a material chosen from the group consisting of: metals and sandwich constructions. It is advantegous to use a rigid portion of the partition member where the connection between the partition member and the connection to the crankshaft to simplify the connection and/or avoid friction damages. A large rigid portion will also cause bigger fluid movement when moving the partition member by pushing or pulling in the point of connection to the crankshaft. When the rigid part pf the partition member has an area almost as large as the chamber cross section, the reciprocating partition member resembels a piston.

According to another embodiment of the present invention each partition member comprises an elastic portion made of an elastomer the partition member material is chosen from the group consisting of: elastomers, metals, sandwich constructions and enforced fabric.

According to a still further embodiment of the present invention the chambers of the fluid meter are axially aligned along the axis of reciprocal action of the partition members. The axial alignment of the chambers is advantageous when manufacturing the fluid meter and when placing more than one fluid meter in a single dispensing machine. The construction is more compact and space effective than e.g. using chambers with an angle of 120 degrees between their respective reciprocating axes.

The chambers can be shaped in different ways. They may e.g. be cylindrical, but could also each have the shape of a truncated cone. A cone shape could e.g. be advantageous to reduce the volume in the fluid meter to approach the volume used in the actual work of the fluid meter. The cross section of each chamber can be of any shape, but may in particular be circular, elliptical, triangular or rectangular.

According to another embodiment of the present invention the fluid meter housing comprises at least one elastically displaceable wall portion. The elastically displaceable element wall portion can absorb sudden pressure transients that the elastically deformable partition member has not already absorbed and that would otherwise threaten to damage the fluid meter. Rapid pressure variations often occur in fuel dispensing systems when a user suddenly stop dispensing fuel.

It is preferred that the fluid meter partition members are operatively connected to the crank shaft by means of a first transmission rod associated with one of the partition members for rotating the crankshaft in response to the reciprocal action of said one partition member, and a second transmission rod associated with the other partition member for rotating the crankshaft in response to the reciprocal action of said other partition member, wherein each of the first and second transmission rods has a slot for receiving a crank pin. It is also preferred that each transmission rod is attached to the partition member associated therewith.

The use of slotted connecting rods, or yokes as they are also called, is a convenient way to connect the crankshaft movement to the partition member. A movement of the partition member may be achieved harmonically according to the Scotch yoke principle enabling the possibility to invoke a perfect sine movement of the connecting rods and ideally also of the movement of the measured fluid.

In a preferred embodiment each slot in each respective connecting rod is linear, to relay a linear derivative of the speed of the movement of the connecting rods possibly producing a perfect sine shape of the movement of the connecting rods. Another possible embodiment is to make each slot in each respective connecting rod curved. This could be a required feature to create a sine shaped movement of the fluid in the fluid meter according to the Scotch yoke principle if the partition member is not rigid across the entire cross section of the fluid meter chamber or cylinder. If the partition member is partly elastic and fastened to the chamber wall, as in the present invention, the movement of the fluid in the chamber invoked by the movement of the partition member, will not be linear. If the partition member e.g. is fastened to the inner wall of the chamber along the partition member periphery, the partition member will form a cone or a truncated cone when not being in the position along the cylinder centre axis where it is fastened to the inner wall. The expansion of the cone will create an exponential increase in fluid volume moved by the partition member for obvious geometrical reasons. A slight curvature in the slot of the yoke or connecting rod can be constructed to match the un-linearity of the volume change invoked by the cone shaped partition member. A curvature is preferably made to decrease the speed of the connecting rods along the respective chamber central axis near their respective end points in the chambers so that the adjusted speed match the geometry of the partition member so as to create a linear movement of fluid in the chambers and thus avoid pulsation problems.

Large cam profiles rotating around the crankshaft will naturally affect both of the chambers, thus requiring chambers having an angle to each other with respect to their respective centre axes. Another possibility is to use two large cam profiles and use chambers that are displaced from one another in the direction of the crank shaft so that one cam profile can contact only one partition member at a time.

According to a still further embodiment of the present invention the fluid meter further comprises a second crank arm, a first connecting rod, associated with one of the partition members and connected to the first crank arm for rotating the crankshaft in response to the reciprocal action of said one partition member, and a second transmission rod associated with the other partition member and connected to the second crank arm for rotating the crankshaft in response to the reciprocal action of said other partition member.

An embodiment using a standard crank shaft assembly with crank shaft, crank arms and jointed connecting rods may be preferrable if the fluid meter is subjected to a high degree of wear. The higher rigidity of the asembly comes at the expense of smoothness in operation, i.e the axial displacement of the partition members in the connection point of the connecting rod, will not follow a perfect sine as is theoretically the case for the corresponding operation using yoke slots according to the Scotch Yoke principle.

Each of the different embodiments of fluid meters mentioned so far may also be bundled into multiple fluid meter assemblies each comprising at least two fluid meters. The invention further also involve a fuel dispensing unit for refuelling vehicles, comprising a fluid meter or a multiple fluid meter assembly as described above.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1a is an exploded diagram of connecting rods having slotted yokes and a crank shaft having two crank arms of a fluid meter according to prior art.
Fig. 1b is a perspective view of a mounted assembly of the prior art of Fig. 1a.
Fig. 2a is a drawing of the concept of the present invention where the operative connection between the crankshaft and the partition members is achieved using a cam shaft.
Fig. 2b is a drawing of the concept of the present invention as in Fig. 2a, where the crank shaft is rotated relative the position shown in Fig 2a.
Fig. 3a is an exploded diagram of connecting rods, a crankshaft having one crank arm, a rotating valve, elastically deformable partition members, a magnetic wheel and a transducer according to a preferred embodiment of a fluid meter according to the present invention.
Fig. 3b is a perspective view of a mounted assembly of Fig. 2a.
Fig. 4 is a cross sectional view of the fluid meter according to the invention taken along the axis of the aligned cylinders, corresponding to the line III of Fig. 2b.
Fig. 5 is a cross sectional view along the line IV in Fig. 3 of the fluid meter according to the invention.
Fig. 6a is a top view of the rotary valve of the fluid meter.
Fig. 6b is a cross sectional view of the rotary valve of the fluid meter according to the invention.
Fig. 7 is a plan view showing the ports of a rotary valve superimposed over a valve seat of the fluid meter in Fig. 3.
Fig. 8 is an isometric view of a unitary assembly incorporating two fluid meters similar to the meter of Figs. 1-6.
Fig. 9a is is an exploded diagram of an alternative embodiment of the fluid meter according to the invention using traditional crank arms and hinged connecting rods.
Fig. 9b is a perspective view of a mounted assembly of Fig. 9a.
Fig. 9c is a perspective view of a mounted assembly of Fig. 9a in a different angular position compared to Fig. 9b.

### Detailed description of preferred embodiments of the invention

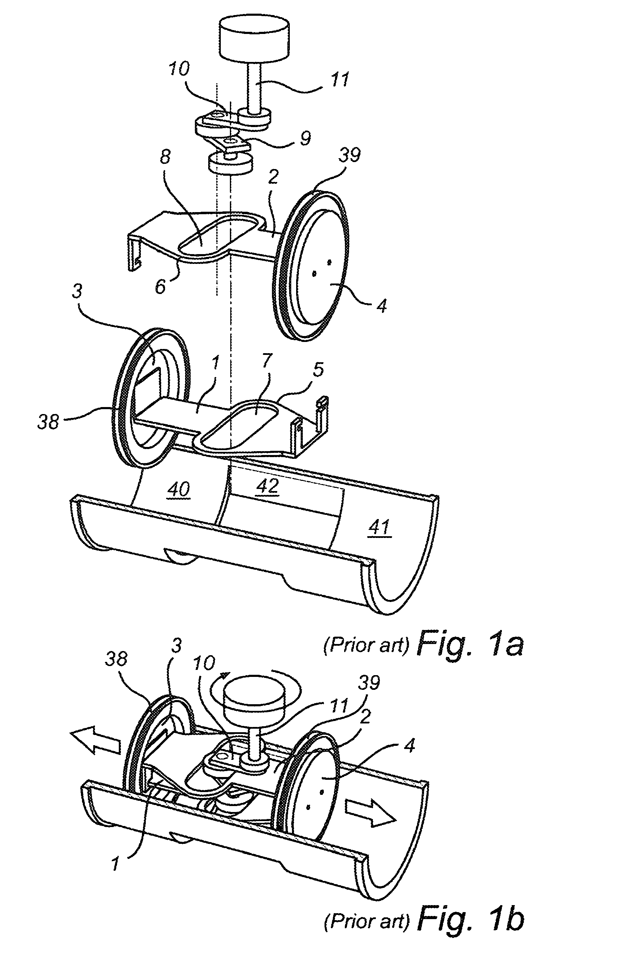

Fig. 1 a and 1 b shows a pair of connecting rods, 1, 2, according to prior art (US 5,686,663 to Spalding et al), each connected to a partition member, 3, 4, in form of a piston as described in the prior art. The connecting rods, 1, 2, have Scotch yoke portions, 5, 6, with oblong yoke slots, 7, 8. The centre axes of the yoke slots are perpendicular to the centre axes of the connecting rods, 1, 2. To move the connecting rods, 1, 2, and thus also the pistons, 3, 4, with a phase difference of 60°, as described in the prior art of Spalding, the yoke portions, 5, 6, are driven by the two crank arms, 9, 10, of the crankshaft, 11 as depicted in Figs. 1 a and 1 b having an angle of 60° to one another. The partition members 3, 4, have circular recesses, 38, 39, for receiving gaskets (not shown). The gaskets are made of a resilient material to seal cylinder head chambers 40 and 41 from a crankcase chamber 42. The two partition members 3, 4, thus divide the cylinder volumes combined with the crank case portion volume in three chambers: the head chambers 40, 41 and the crankcase chamber 42, sealed from each other by the resilient gaskets with all the drawbacks that involves as previously described.

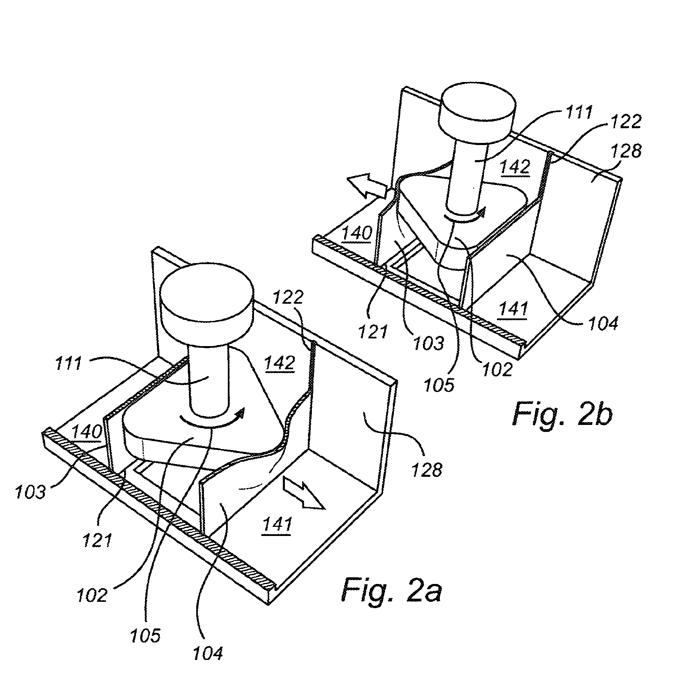

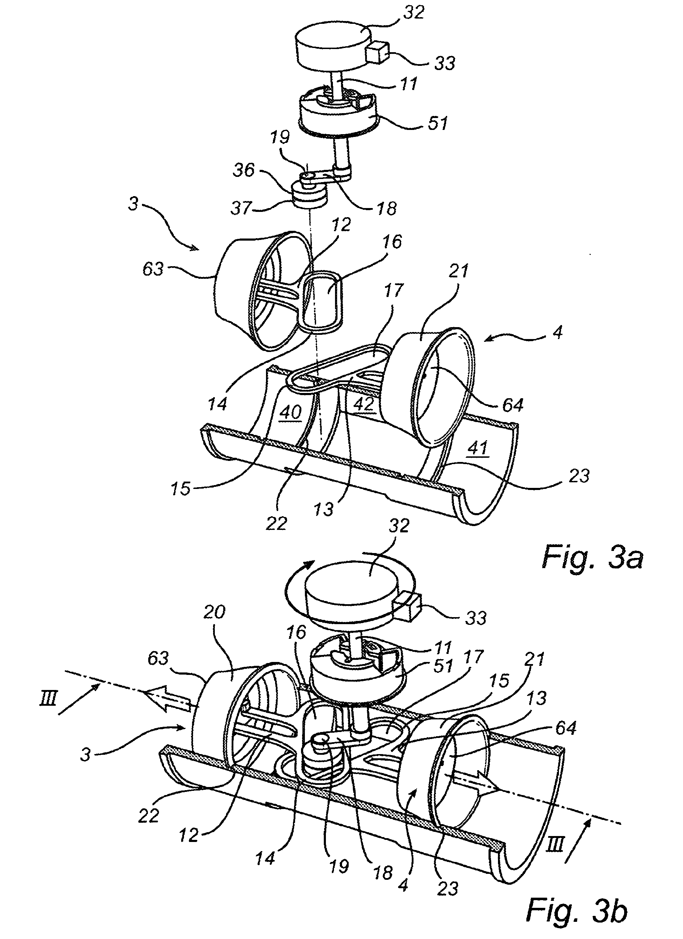

Fig. 2a and 2b show a possible embodiment of the current invention. It should be noted that details as chamber end pieses, inlet and outlet valves, channels connecting the chambers to the valves etc. have been omitted in Fig. 2a and 2b. Compared to the prior art, the pistons are replaced by two partitions members 103, 104 in the form of membranes, dividing the housing 128 into two chambers 140, 141 and a crankcase 142, all sealed from one another. A rotatable crankshaft 111 is disposed in the crankcase 142 operatively connected to the partition members 103, 104 such that the crankshaft 111 is rotated in response to the reciprocal action of said partition members 103, 104. In Fig. 2a and 2b the operatively connection between the crankshaft 111 and the partition members 103, 104 is achieved by the use of a cam profile 102, having a triangular shape to match a reciprocating action of the two partition members that is 120° out of phase. In Fig. 2a, the cam profile has displaced the partition member 104 into the chamber 141 to its dead-end position pressing fluid out of the chamber 141. When fluid is instead allowed to flow into the chamber 141 (Fig. 2a) a pressure will be applied to the partition member 104 towards the crankcase chamber 142. The cam profile 102 will then be forced to move and continue its rotating motion in the direction of the arrow 105. The cam profile will as it rotates next begin displacing the partition member 103 pressing fluid out of the chamber 140, see Fig. 2b. This cyclic reciprocating movement of the partion members require that fluid is allowed to flow in and out of the chambers in a properly timed manner e.g. by use of a rotating inlet/outlet valve (not shown) similar to the solution of the prior art. In this embodiment one of the end positions of the partition members will be in line with the attachment position 121, 122 of the partition member to the housing 128. In Fig. 2a and 2b all of the partition member area 103, 104 is made if flexible material. It should, however, be noted that the partition members could have rigid parts, preferably in their middle parts to increase volume movement in the chambers 140, 141, 142 induced by the cam profile 121 and the partition members 103, 104. The partition members could also be made entirely or partly of flexible material, e.g. formed as bellows to enable flexible deformation during the reciprocating movement of the partition members. Fig. 3a and 3b shows a preferred embodiment of the present invention, more similar to the prior art solution, especially with regard to the operatively connection between the crankshaft 11 and the partition members 3, 4 than shown in Fig. 1 a and 1 b. It should be noted that also in Figs. 3a and 3b details as chamber end pieces, inlet and outlet valves, channels connecting the chambers to the valves etc. have been omitted to simplify the figures. The volume in the fluid meter where the partition members operate is divided into three sections. Two chambers 40, 41 are placed on either side of a crank case 42. Each chamber 40, 41 has a crank case end near the crank case and a head end on the opposite side of the chamber 40, 41. The reciprocating movement is achieved by partition members 3, 4, having rigid central discs 63, 64 with elastic portions 20, 21 at their respective radial peripheral edges. Connecting rods 12, 13 connect the partition members 3, 4 to the crankshaft 11. The connecting rods 12, 13 have yoke portions 14, 15, with yoke slots 16, 17. The centre axes of the oblong yokes slots, 16, 17, are each angled 30° compared to the perpendicular direction to the centre axes of the connecting rods 1, 2 to perform a reciprocating movement of the partition members, 3, 4, using only one crank arm, 18. The combined angle between the centre axes of the oblong yoke slots of the two connecting rods, 12, 13, is 60°. This arrangement of the yoke slots will invoke a reciprocating movement of the pistons 60° out of phase. The Figs. 3a and 3b further show the fastening of the elastic portion, 20, 21, of the partition members to the cylinder walls by fitting the radial periphery of the elastic portions, 20, 21, to the recesses, 22, 23 so that the partion member seal the three sections of the fluid meter from one another. In the Fig. 3a and 3b the elastic portions, 20, 21, are nearly fully extended and the partition members are near their dead-end position. The partition member, 3, is near the head end of chamber 40 while the partition member, 4, is near the crankcase end of chamber 41.

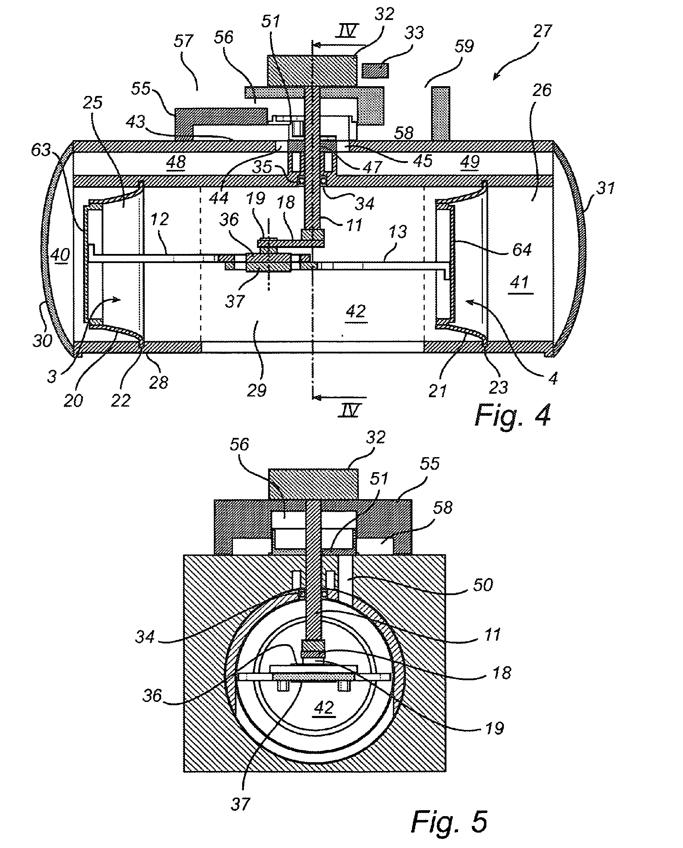

In Fig. 4 the reference numeral 27 designates a flow meter according to a preferred embodiment of the present invention. The flow meter 27 includes a flow meter body 28 having a crankcase portion 29 (indicated by the broken lines) and opposing, axially aligned, first and second chamber portions, 25 and 26, respectively, extending outwardly from the crankcase (from the broken lines). The head ends of the chamber portions 25 and 26 are capped by first and second head end cover plates 30 and 31, respectively.

A magnetic wheel 32 is connected to the crankshaft 11 at the centre of the magnetic wheel 32. A series of magnetic poles (not shown) are incorporated in the magnetic wheel 32 angularly spaced about the outer circumference of the wheel 32.

A Hall effect transducer 33 having two sensors, well known in the art, is mounted within close proximity to the magnetic wheel 32. Due to the proximity of the sensors to the wheel 32, the sensors can detect fluctuations in the magnetic influence of the magnetic poles of the wheel 32 when the wheel 32 rotates. In response to such detection, the transducer 33 generates a pulsed signal proportional to the rate of rotation of the wheel 32. The two sensors are, furthermore, horizontally spaced so that the direction of rotation of the magnetic wheel 32 can be determined by identifying which of the two sensors first detects the magnetic influence of a particular pole.

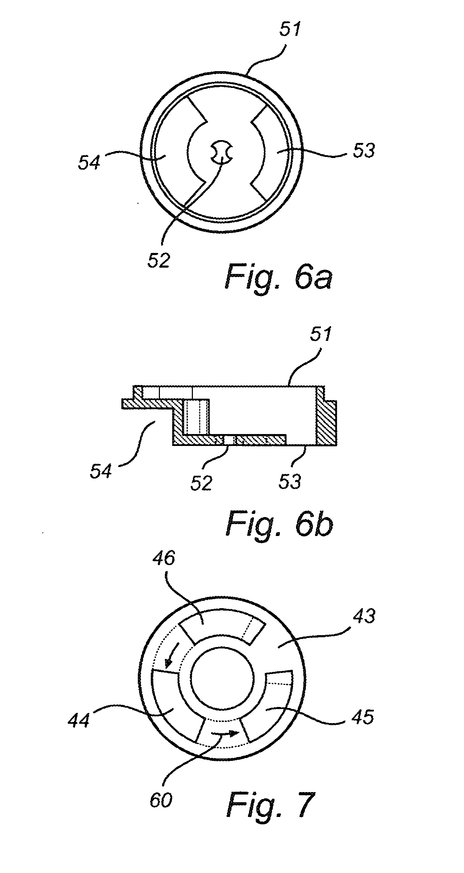

A ball bearing assembly 34 is fitted in a small bore 35 in the meter body 28. A crankshaft 11 is rotatably disposed in the bearing assembly 34. The crankshaft 11 has a vertical orientation bearing laterally against the bearing assembly 34. The upper portion of the crank shaft 11 extends above the bearing assembly 34 and is shaped to receive a rotary valve more thoroughly discussed with reference to Figs. 6 and 7 below. A crank arm 18 is connected to the lower portion of the crankshaft 11 and extends radially outwardly from the crankshaft. A crankpin 19 extends downwardly from the radially outer part of the crank arm 18 through a first roller bearing 36 and a second roller bearing 37, the second roller bearing 37 being located below the first roller bearing 36.

The flow meter 27 further includes first and second partition members 3, 4, disposed in the cylinders 25 and 26, respectively. First and second connecting rods, 12, 13, drivingly connect the respective partition members 3, 4, to the respective first and second roller bearings, 36, 37. The connecting rods 12, 13 are hence connected to the crankshaft via the roller bearings, 36, 37. The connecting rods 12, 13 are more clearly shown in Fig. 3a and 3b. The first and second connecting rods, 12, 13 are in this particular embodiment formed from metal sheet with yokes portions, 14, 15, which are punched to provide first and second oblong slotted yokes, 16, 17 for slidingly engaging the respective first and second roller bearings, 36, 37. The oblong slotted yokes, 16, 17 do in this embodiment have straight central axes with an angle of 60° between the respective centre axis. The first and second slotted yokes 16, 17, have centre axes with angles of 120° and 60°, respectively, to the centre axis of the axially aligned first and second chamber portions 25 and 26.

Fig. 7 shows the valve seat 43 as seen from the top of the flow meter 27 of Fig. 4. The valve seat 43 includes first, second and third arcuate ports, 44, 45, 46, which each cover an arc about the crankshaft bore 47 of approximately 80° and are angularly spaced apart approximately 40° between ports. Referring to both Figs. 4 and 7 the first port 44 is in fluid communication with the first head end chamber 40 via a first passageway 48 formed in the fluid meter body 28. The second port 45 is in fluid communication with the second head end chamber 41 via a second passageway 49 formed in the fluid meter body 28. Referring to Figs. 7 and 5, the third port 46 is in fluid communication with the crankcase chamber 42 via a third passageway 50 formed in the fluid meter body 28.

Referring to Fig.6a, a rotary valve 51 is positioned on top of the valve seat 43 to control the admission and discharge of a fluid into and out of the first, second, and third ports 44, 45, 46. The rotary valve 51, with reference to Figs. 6a and 6b, includes a hole 52 formed in the center thereof through which the crankshaft 11 extends for rotatably coupling the valve 51 to the crankshaft 11. Referring to Figs. 6a, 6b and 7, the rotary valve 51 further includes an arcuate inlet port 53 and an arcuate outlet port 54 axially and radially aligned to alternately register with the first, second, and third arcuate ports 44, 45, 46 of the valve seat 43 when the valve 51 is rotated by the crankshaft 11 The ports 53, 54 each cover an arc about the hole 52 of approximately 100° and are angularly spaced apart approximately 80° between ports.

As further shown in Figs. 4 and 5, a mounting flange (or meter dome) 55 is secured to the top of the flow meter body 28. A supply chamber 56 is formed in the flange for supplying fluid to the inlet port 53 of the rotary valve 51. A supply port 57 formed in the flange provides fluid communication between the supply chamber 56 and fluid supply lines (not shown). Similarly, an annular discharge chamber 58 is formed in the flange 55 for receiving fluid discharged from the outlet port 54 of the rotary valve 51. A discharge port 59 provides fluid communication between the discharge chamber 58 and fluid discharge lines (not shown).

Fig. 7 further depicts one instantaneous position of the rotary valve ports 53, 54 (shown in phantom) superimposed over the first, second, and third ports 44, 45, 46 of the valve seat 43. In operation, the rotary valve 51 is rotated by the crankshaft 11 in a counterclockwise direction as indicated by the arrow 60. Accordingly, the inlet and outlet ports 53, 54 sequentially register with each of the ports 44, 45, 46. As shown in Fig. 7, the inlet port 53 is registered with the third port 46 and the outlet port 54 is registered with the second port 45. Registration of the inlet port 53 with the first port 44 is depicted as impending. Because each of the ports 44, 45, 46 cover an angle of approximately 80° and each of the rotary valve ports 53, 54 cover an angle of approximately 100°, each port 44, 45, 46 alternately registers with the inlet port 53 for 180° of rotation of the crankshaft 1 and then with the outlet port 54 for 180° of rotation. It can be appreciated that the inlet port 53 or the outlet port 54 may register with one or two, but not all three, of the ports 44, 45, 46 simultaneously. The ports 44, 45, 46 may, however, register with only one of the ports 53, 54 at a time.

To more fully illustrate the operation of the flow meter 27, and with reference to Fig. 4, it will be assumed that, initially, the flow meter body 28 is filled with fluid, the crankshaft 11 is rotated to place the first partition member 3 in as close proximity to the head cover 30 as possible (i.e., a "top dead centre" position), the second partition member 4 leads the first partition member 3 by a phase angle of 60°, and the rotary valve ports 53, 54 are related to the first, second, and third ports 44, 45, 46 as shown in Fig. 7. A fluid, such as gasoline from an external source (not shown), is then supplied through the supply port 57 and passed through the supply chamber 56, the inlet port 53 of the rotary valve 51, and, in accordance with Fig. 7, through the third port 46. The fluid then flows through the third passageway 50 (Fig. 5) and into the crankcase chamber 42 where it applies pressure to displace the second partition member 4 outwardly (away from the crankshaft 11). The first partition member 3 resists outward movement since it is in a top dead centre position. The outward movement of the second partition member 4 expels fluid from the second chamber 41 thereby causing the fluid to pass through the second passageway 49, the outlet port 54 of the rotary valve 51, the discharge chamber 58, and out through the discharge port to 59 to a discharge line (not shown). The movement of the second partition member 4 also drives the crankshaft 11 via the second connecting rod 13. Accordingly, the crankshaft 11 imparts counter clockwise rotation to the rotary valve 51 and the inlet port 53 begins to register with the first port 44. Fluid in the supply chamber 48 then begins to flow through the inlet port 53 of the rotary valve 51 and through the first port 44. The fluid then flows through the first passageway 48 into the first chamber 40 and applies pressure to displace the first partition member 3 inwardly (towards the crankshaft 11), thereby effecting further rotation of the crankshaft 11 and the rotary valve 51. The process continues according the principles described herein. As a result, the partition members 3, 4 reciprocate in the cylinders 25, 26, respectively, thereby rotating the crankshaft 11, the attached rotary valve 51, and the magnetic wheel 32. Fluid is prevented from flow between the chambers 40, 41, 42 in the fluid meter due to the sealing by the elastic portions 20, 21 ot the partition members 3, 4. The sensors in the Hall effect transducer 33 detect the consequent fluctuation in the magnetic influence of the magnetic poles on the wheel 32 and generate a pulsed signal which is proportional to the flow rate of the fluid passing through the flow meter 27. Although not clear from the drawings, it is understood that the pulsed signal may be employed to drive an electronic counter and indicator for recording the volume and total value of fluid, such as gasoline, dispensed through the flow meter 27.

The inlet and outlet ports 53, 54 of the rotary valve 51 and the ports 44, 45, 46 cooperate such that the volume of fluid admitted to, or withdrawn from, the crankcase chamber 42 is equal to the algebraic sum of the volume respectively withdrawn from, or admitted to, the head end chambers 40, 41. Thus the crankcase chamber 42 provides what may be termed a "blind" or "hypothetical" partition member and cylinder, mechanically and hydraulically cooperating with the partition members 3, 4 which are structurally existent. Thus the meter operates hydraulically and mechanically like a three piston meter or hydraulic motor although it only has the physical components of a two piston meter or motor. It should be noted that the flow into and out of the flow meter 27 is substantially constant. This constant flow results from reciprocating the axially-aligned partition members 3, 4 60° out of phase and from utilizing yokes 16, 17 as described above, which are substantially harmonic in conformity with Scotch Yokes.

It should also be noted that the partition members 3, 4; 103, 104, in any of the embodiments disclosed with reference to Figs 2a, 2b; Figs 3a, 3b; Fig 4, Fig 5 can be entirely made of elastic material or have any size of the portion that is rigid, the rigid part preferably being placed in the middle of the partition members 3, 4; 103, 104.

It is understood that the yoke slots of the invention, could have other shapes. The yokes may be curved to accomplish a perfect sine function flow movement or any modification of a periodic sine function. Depending on the chosen embodiments of the partition members 3, 4, 103, 104, especially the elastic portion 20, 21, 103, 104, the partition member will form a cone or a truncated cone when moved from its central position. The cone shape will naturally induce a progressive increase in volume movement as a function of movement distance of the connecting rods 12, 13 in the direction of the central axes of the chambers 40, 41. To reduce this effect, that will lead to increased pulsation in the flow through the fluid meter, the yoke slots 16, 17 may be curved near the ends to slow down the movement of the connecting rod gradually from its central position to match the exponential behaviour of the partition member, 3, 4; 103, 104.

It is further understood that the chambers 40, 41; 140, 141 can have non-cylindrical shapes depending on the chosen embodiment of the partition members 3, 4; 103, 104 with regard to how large the rigid part is, if any. The chambers 40, 41; 140, 141 can be cone-shaped or have basically any shape as long as the partition member deformation can fit in the volume defined by the chambers 40, 41; 140, 141.

As indicated in Fig.2a and 2b the operatively connection between the crank shaft and the partition members can be achieved in many ways. In Fig. 2a and 2b a cam profile 102 is used to induce the reciprocal action of the partition members 103, 104. It should, however be noted that the invention could be realized using multiple cam profiles or crank arms. If using large individual cam profiles for the two partition members, the positions of the two chambers might have to be shifted along the crank shaft so that one cam profile only affect one partition member.

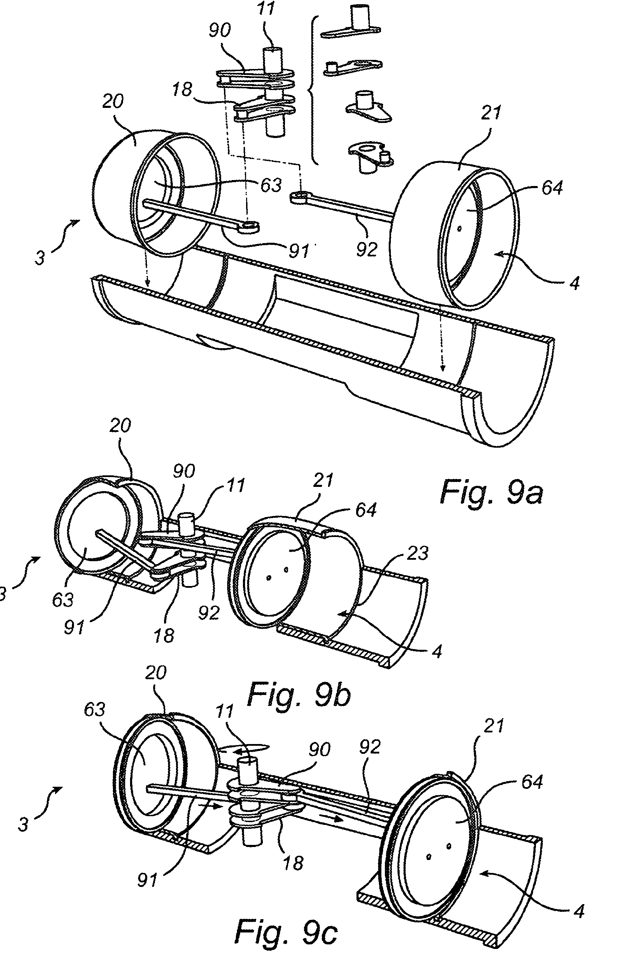

Fig 9a, 9b and 9c show an embodiment of the present invention using crank arms 18, 90 with jointed connecting rods 91, 92 instead of slotted yokes 12, 13 as in the other figures. This solution is conventional from other technical areas, compare e.g. with the piston arrangement in an internal combustion engine, and is very rigged. The drawback is that the axial movement of the partition members 3, 4 will not be according to a perfect sine shape as in the case of using slotted yokes according to the Scotch Yoke principle. In Fig. 9a, 9b and 9c the connecting rods 91, 92 are rigidly connected to the rigid central disks 63, 64 of the partition members 3, 4. The slight angular movement of the partition members due to the changing angle of the connecting rod relative to the chamber centre axis are allowed by the elastic portions 20, 21, making it possible to omit a hinged connection. It should, however, be noted that the connecting rods 91, 92 could be connected via joints as well to avoid that the rigid central disks 63, 64 of the partition members 3, 4, are angled, thereby avoiding some stress of the membranes invoked by the angle changes of the rigid central disks 63, 64.

It is further understood that the ports 44, 45, 46, 53, 54 may cover arcs of a number of different angles and, moreover, may have non-arcuate shapes. In the embodiment of Fig. 2a and 2b where the reciprocal action will occur three times per revolution of the crank shaft, the number of openings in the rotary valve and the valve seat will have to be multiplied by three, so that the rotary valve has six openings facing the rotary valve (three connected to the inlet and three to the outlet) and so that the valve seat has nine openings (three outlets and three inlet openings).

It is also understood that the deformation of the partition members 103, 104; 3, 4 during the reciprocating movement can be achieved by flexible or bendable parts of the partition members 103, 104; 3, 4. The partition members can e.g. be constructed by a rigid disc, in the same manner as the embodiment of Fig. 3a, 3b, 4 and 5, having a flexible parts, instead of the elastic parts 20, 21, that are sealingly attacted to the inner wall recesses 22, 23. The flexible or bendable parts would then function in a bellow like manner allowing the partition members 103, 104; 3, 4 to reciprocate in their chambers 140, 141; 40, 41, respectively.

As a result of all of the foregoing, the fluid meter of the present invention is, thus, compact, yet cost-efficient and mechanically efficient. The lack of gaskets leads to totally sealed chambers 40, 41, 42 with no leakage in between one another.

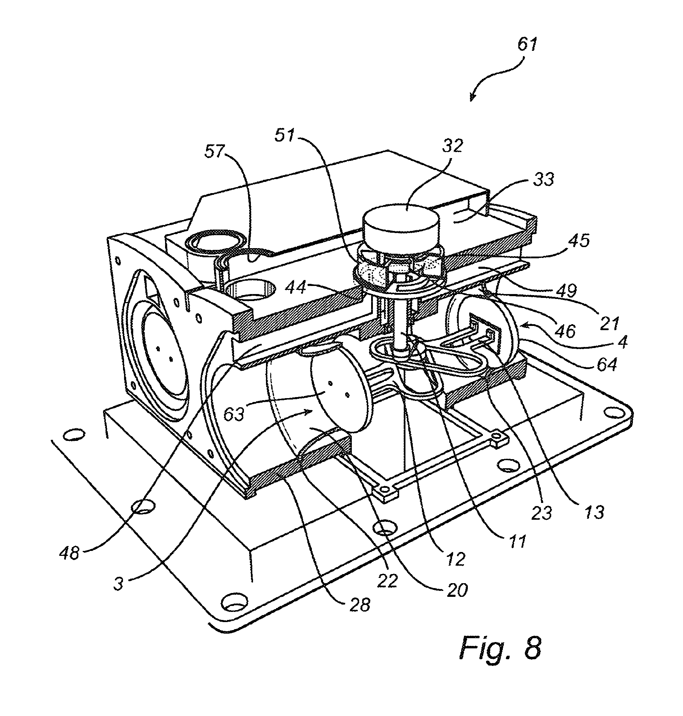

It is further understood that multiple flow meters 27 may be integrated into a single assembly to gain several advantages over the single flow meter described hereinabove. For example, a duplex flow meter assembly 61 wherein two fluid meters 27, as depicted in Fig. 8, are integrated together, would facilitate the construction of gasoline dispenser pump stations having two, four, six, or eight gasoline dispensers. Furthermore, a duplex flow meter 61 would only require a single meter body, meter dome, and end cover, thereby economizing on manufacturing costs. Installation of duplex flow meters 61 is facilitated as a result of simplified mounting and pipe work and the reduced cabinet size required to house a duplex fluid meter. Flexibility is also enhanced because a duplex flow meter could also serve a single hose outlet at twice the speed of delivery of a single unit flow meter.

It is still further understood that the supply port and the discharge port may instead be utilized as discharge and supply ports respectively. Furthermore, the supply and discharge lines connected thereto may be arranged for measuring the volume of any fluid that flows through any line. For example, in addition to measuring a fluid, such as gasoline, that flows from a dispenser, the meter could be used to measure the volume of water flowing from a pipe into a structure such as a residential house or other building.

## Claims

1. A fluid meter (27) for a fuel dispensing unit comprising:
a housing (28; 128),
partition members (3, 4; 103, 104) arranged in said housing (28; 128) for reciprocal action, said partition members (3, 4; 103, 104) dividing said housing (28; 128) in two chambers (40, 41; 140, 141) and an intermediate crankcase (42; 142),
a rotatable crankshaft (11; 111) disposed in said crankcase (42; 142) and operatively connected to said partition members (3, 4; 103, 104) such that the crankshaft (11; 111) is rotated in response to said reciprocal action of said partition members (3, 4; 103, 104),
each partition member (3, 4; 103, 104) is attached to said housing (28; 128) and arranged for said reciprocal action by means of elastic or flexible deformation
**characterised in that**
the partition members (3, 4; 103, 104) are operatively connected to the crank shaft (11; 111) by means of at least one cam supported by said crank shaft (11; 111) and associated with at least one of the partition members (3, 4; 103, 104) for rotating the crankshaft (11; 111) in response to the reciprocal action of said partition members (3, 4; 103, 104).

2. A fluid meter (27) according to claim 1, wherein each partition member (3, 4; 103, 104) is sealingly attached to said housing (28; 128).

3. A fluid meter (27) according to any of claims 1or 2, wherein each partition member (3, 4; 103, 104) comprises an elastic portion (20, 21) made of an elastomer.

4. A fluid meter (27) according to any of claims 1- 3, wherein each partition member (3, 4; 103, 104) comprises a flexible portion made of a material chosen from the group consisting of: elastomers and enforced fabric.

5. A fluid meter (27) according to any of claims 1- 4, wherein each partition member (3, 4; 103, 104) comprises a rigid portion (63, 64) made of a material chosen from the group consisting of: metals and sandwich constructions.

6. A fluid meter (27) according to any one of claims 1-5, wherein the chambers (40, 41; 140, 141) are cylindrical.

7. A fluid meter (27) according to any one of claims 1-6, wherein the chambers (40, 41; 140, 141) each has a shape of a truncated cone.

8. A fluid meter (27) according to any one of claims 6-7, wherein the chambers (40, 41; 140, 141) each has a cross section which is circular, elliptical, triangular or rectangular.

9. A fluid meter (27) according to any one of claims 1-8, wherein the partition members (3, 4; 103, 104) are operatively connected to the crank shaft (11; 111) by means of
a first transmission rod (12) associated with one of the partition members (3) for rotating the crankshaft (11) in response to the reciprocal action of said one partition member (3), and
a second transmission rod (13) associated with the other partition member (4) for rotating the crankshaft (11) in response to the reciprocal action of said other partition member (4),
wherein each of the first and second transmission rods (12, 13) has a slot (16, 17) for receiving a crank pin (19) arranged on a crank arm (18).

10. A fluid meter (27) according to claim 9, wherein said each slot (16, 17) is linear.

11. A fluid meter (27) according to claim 9, wherein said each slot (16, 17) is curved.

12. A fluid meter (27) according to claim 1-8, further comprising a first crank arm (18) and a second crank arm (90),
a first connecting rod (91) associated with one of the partition members (3) and connected to the first crank arm (18) for rotating the crankshaft (11) in response to the reciprocal action of said one partition member (3), and
a second transmission rod (92) associated with the other partition member (4) and connected to the second crank arm (90) for rotating the crankshaft (11) in response to the reciprocal action of said other partition member (4).

13. A multiple fluid meter assembly comprising at least two fluid meters according to any of the claims 1 - 12.

14. A fuel dispensing unit for refuelling vehicles, **characterised in that** it comprises a fluid meter as claimed in any one of claims 1 - 12 or a multiple fluid meter assembly according to claim 13.

## Patentansprüche

1. Durchflussmesser (27) für eine Kraftstoff-Abgabeeinheit, der Folgendes umfasst:
ein Gehäuse (28; 128),
Trennelemente (3, 4; 103, 104), die für eine hin- und hergehende Bewegung in dem Gehäuse (28; 128) angeordnet sind, wobei die Trennelemente (3, 4; 103, 104) das Gehäuse (28; 128) in zwei Kammern (40, 41; 140, 141) und ein dazwischenliegendes Kurbelgehäuse (42; 142) teilen,
eine drehbare Kurbelwelle (11; 111), die in dem Kurbelgehäuse (42; 142) angeordnet und wirksam mit den Trennelementen (3, 4; 103, 104) verbunden ist derart, dass die Kurbelwelle (11; 111) als Reaktion auf die hin- und hergehende Bewegung der Trennelemente (3, 4; 103, 104) gedreht wird,
wobei jedes Trennelement (3, 4; 103, 104) mit Hilfe einer elastischen oder flexiblen Verformung an dem Gehäuse (28; 128) befestigt und für die hin- und hergehende Bewegung angeordnet ist,
**dadurch gekennzeichnet, dass**
die Trennelemente (3, 4; 103, 104) mit Hilfe wenigstens eines Nockens, der durch die Kurbelwelle (11; 111) getragen wird und mit wenigstens einem der Trennelemente (3, 4; 103, 104) verknüpft ist, wirksam mit der Kurbelwelle (11; 111) verbunden ist, um die Kurbelwelle (11; 111) als Reaktion auf die hin- und hergehende Bewegung der Trennelemente (3, 4; 103, 104) zu drehen.

2. Durchflussmesser (27) nach Anspruch 1, wobei jedes Trennelement (3, 4; 103, 104) abdichtend an dem Gehäuse (28; 128) befestigt ist.

3. Durchflussmesser (27) nach Anspruch 1 oder 2, wobei jedes Trennelement (3, 4; 103, 104) einen elastischen Abschnitt (20, 21) umfasst, der aus einem Elastomer hergestellt ist.

4. Durchflussmesser (27) nach einem der Ansprüche 1 bis 3, wobei jedes Trennelement (3, 4; 103, 104) einen flexiblen Abschnitt umfasst, der aus einem Werkstoff hergestellt ist, der ausgewählt ist aus der Gruppe, die aus Folgendem besteht: Elastomeren und verstärktem Gewebe.

5. Durchflussmesser (27) nach einem der Ansprüche 1 bis 4, wobei jedes Trennelement (3, 4; 103, 104) einen starren Abschnitt (63, 64) umfasst, der aus einem Werkstoff hergestellt ist, der ausgewählt ist aus der Gruppe, die aus Folgendem besteht: Metallen und Sandwich-Konstruktionen.

6. Durchflussmesser (27) nach einem der Ansprüche 1 bis 5, wobei die Kammern (40, 41; 140, 141) zylindrisch sind.

7. Durchflussmesser (27) nach einem der Ansprüche 1 bis 6, wobei die Kammern (40, 41; 140, 141) jeweils die Form eines abgestumpften Kegels haben.

8. Durchflussmesser (27) nach einem der Ansprüche 6 bis 7, wobei die Kammern (40, 41; 140, 141) jeweils einen Querschnitt haben, der kreisförmig, elliptisch, dreieckig oder rechteckig ist.

9. Durchflussmesser (27) nach einem der Ansprüche 1 bis 8, wobei die Trennelemente (3, 4; 103, 104) wirksam mit der Kurbelwelle (11; 111) verbunden sind mit Hilfe von
einer ersten Übertragungsstange (12), die mit dem einen der Trennelemente (3) verknüpft ist, um die Kurbelwelle (11) als Reaktion auf die hin- und hergehende Bewegung des einen Trennelementes (3) zu drehen, und
einer zweiten Übertragungsstange (13), die mit dem anderen Trennelement (4) verknüpft ist, um die Kurbelwelle (11) als Reaktion auf die hin- und hergehende Bewegung des anderen Trennelementes (4) zu drehen,
wobei sowohl die erste als auch die zweite Übertragungsstange (12, 13) einen Schlitz (16, 17) zum Aufnehmen eines Kurbelzapfens (19), der an einem Kurbelarm (18) angeordnet ist, hat.

10. Durchflussmesser (27) nach Anspruch 9, wobei der Schlitz (16, 17) linear ist.

11. Durchflussmesser (27) nach Anspruch 9, wobei der Schlitz (16, 17) gekrümmt ist.

12. Durchflussmesser (27) nach einem der Ansprüche 1 bis 8, der ferner Folgendes umfasst: einen ersten Kurbelarm (18) und einen zweiten Kurbelarm (90),
eine erste Verbindungsstange (91), die mit dem einen der Trennelemente (3) verknüpft und mit dem ersten Kurbelarm (18) verbunden ist, um die Kurbelwelle (11) als Reaktion auf die hin- und hergehende Bewegung des einen Trennelementes (3) zu drehen, und
eine zweite Übertragungsstange (92), die mit dem anderen Trennelement (4) verknüpft und mit dem zweiten Kurbelarm (90) verbunden ist, um die Kurbelwelle (11) als Reaktion auf die hin- und hergehende Bewegung des anderen Trennelementes (4) zu drehen.

13. Baugruppe aus mehreren Durchflussmessern, die wenigstens zwei Durchflussmesser nach einem der Ansprüche 1 bis 12 umfasst.

14. Kraftstoff-Abgabeeinheit zum Auftanken von Fahrzeugen, **dadurch gekennzeichnet, dass** sie einen Durchflussmesser nach einem der Ansprüche 1 bis 12 oder eine Baugruppe aus mehreren Durchflussmessern nach Anspruch 13 umfasst.

## Revendications

1. Mesure de fluide (27) pour unité de distribution de carburant comprenant:
un logement (28; 128),
des éléments de division (3, 4; 103, 104) agencés dans ledit logement (28, 128) en vue d'une action réciproque, lesdits éléments de division (3, 4; 103, 104) divisant ledit logement (28; 128) en deux chambres (40, 41; 410, 141) et un carter intermédiaire (42; 142),
un vilebrequin rotatif (11; 111) disposé dans ledit carter (42; 142) et
raccordé opérationnellement auxdits éléments de division (3, 4; 103, 104) de sorte que le vilebrequin (11; 111) soi tourné en réponse à ladite action réciproque desdits éléments de division (3, 4; 103, 104),
chaque élément de division (3, 4; 103, 104) est fixé audit logement (28; 128) et agencé en vue d'une action réciproque au moyen d'une déformation élastique ou flexible,
caractérisé e en ce que
les éléments de division (3, 4; 103, 104) sont raccordés opérationnellement au vilebrequin (11; 111) au moyen d'au moins une came supportée par ledit vilebrequin (11; 111) et associés à au moins un des éléments de division (3, 4; 103, 104) pour faire tourner le vilebrequin (11; 111) en réponse à l'action réciproque desdits éléments de division (3, 4; 103, 104).

2. Mesure de fluide (27) selon la revendication 1, dans laquelle chaque élément de division (3, 4; 103, 104) est fixé de manière étanche audit logement (28; 128).

3. Mesure de fluide (27) selon une quelconque des revendications 1 ou 2, dans laquelle chaque élément de division (3, 4; 103, 104) comprend une portion élastique (20, 21) constituée d'un élastomère.

4. Mesure de fluide (27) selon une quelconque des revendications 1 à 3, dans laquelle chaque élément de division (3, 4; 103, 104) comprend une portion flexible constituée d'un matériau choisi parmi le groupe comprenant: des élastomères et un tissu renforcé.

5. Mesure de fluide (27) selon une quelconque des revendications 1 à 4, dans laquelle chaque élément de division (3, 4; 103, 104) comprend une portion rigide (63, 64) fabriquée dans un matériau choisi parmi le groupe comprenant: des métaux et des constructions en sandwich.

6. Mesure de fluide (27) selon une quelconque des revendications 1 à 5, dans laquelle les chambres (40,41;140,141 sont cylindriques.

7. Mesure de fluide (27) selon une quelconque des revendications 1 à 6, dans laquelle les chambres (40, 41; 140, 141) ont chacune une forme de cône tronqué.

8. Mesure de fluide (27) selon une quelconque des revendications 6 à 7, dans laquelle les chambres (40, 41; 140, 141) ont chacune une section transversale qui est circulaire, elliptique, triangulaire ou rectangulaire.

9. Mesure de fluide (27) selon une quelconque des revendications 1 à 8, dans laquelle les éléments de division (3, 4; 103, 104) sont raccordés opérationnellement au vilebrequin (11; 111) au moyen de
une première tige de transmission (12) associée à un des éléments de division (3) pour tourner le vilebrequin (11) en réponse à l'action réciproque dudit un élément de division (3), et
une seconde tige de transmission (13) associée à l'autre élément de division (4) pour tourner le vilebrequin (11) en réponse à l'action réciproque dudit autre élément de division (4),
dans laquelle chacune de la première et la seconde tiges de transmission (12, 13) comporte une fente (16, 17) pour recevoir un maneton (19) agencé sur un bras de manivelle (18).

10. Mesure de fluide (27) selon la revendication 9, dans laquelle chaque dite fente (16, 17) est linéaire.

11. Mesure de fluide (27) selon la revendication 9, dans laquelle chaque dite fente (16, 17) est incurvée.

12. Mesure de fluide (27) selon les revendications 1 à 8, comprenant un premier bras de manivelle (18) et un second bras de manivelle (90),
une première tige de raccordement (91) associée à un des éléments de division (3) et raccordée au premier bras de manivelle (18) pour tourner le vilebrequin (11) en réponse à l'action réciproque dudit un élément de division (3), et
une seconde tige de transmission (92) associée à l'autre élément de division (4) et raccordée au second bras de manivelle (90) pour tourner le vilebrequin (11) en réponse à l'action réciproque dudit autre élément de division (4).

13. Ensemble de mesure de fluide multiple comprenant au moins deux mesures de fluide selon une quelconque des revendications 1 à 12.

14. Unité de distribution de carburant pour ravitailler en carburant des véhicules, **caractérisé en ce qu'**elle comprend une mesure de fluide selon une quelconque des revendications 1 à 12 ou un ensemble de mesure de fluide multiple selon la revendication 13.
